# EUROPÄISCHE PATENTSCHRIFT

(11) **EP 3 328 620 B1**
(45) Veröffentlichungstag und Bekanntmachung des Hinweises auf die Patenterteilung: **24.03.2021**
(21) Anmeldenummer: 16797742.0
(22) Anmeldetag: 10.11.2016
(51) Int. Cl.: B29C 64/153, B29C 64/205

(54) **BESCHICHTUNGSEINHEIT UND VERFAHREN ZUM HERSTELLEN EINES DREIDIMENSIONALEN OBJEKTS**
COATING UNIT AND METHOD FOR PRODUCING A THREE-DIMENSIONAL OBJECT
UNITÉ DE REVÊTEMENT ET PROCÉDÉ POUR LA FABRICATION D'UN OBJET TRIDIMENSIONNEL

(30) Priorität: 10.11.2015 DE 102015222100
(43) Veröffentlichungstag der Anmeldung: 06.06.2018
(73) Patentinhaber: EOS GmbH Electro Optical Systems, 82152 Krailling (DE)
(72) Erfinder: PATERNOSTER, Stefan, 82346 Andechs (DE); GRÜNBERGER, Stefan, 81739 München (DE)
(74) Vertreter: Prüfer & Partner mbB Patentanwälte · Rechtsanwälte
(86) Internationale Anmeldenummer: PCT/EP2016/001876
(87) Internationale Veröffentlichungsnummer: WO 2017/080660

(56) Entgegenhaltungen:
- EP-A1- 0 612 566
- EP-A1- 2 859 973
- DE-A1- 10 105 504
- DE-A1- 19 928 245

## Beschreibung

Die vorliegende Erfindung bezieht sich auf ein Verfahren zum Herstellen eines dreidimensionalen Objekts durch schichtweises Aufbringen und selektives Verfestigen eines pulverförmigen Aufbaumaterials, sowie auf eine Beschichtungseinheit.

Vorrichtungen und Verfahren dieser Art werden beispielsweise beim Rapid Prototyping, Rapid Tooling oder Additive Manufacturing verwendet. Ein Beispiel eines solchen Verfahrens ist unter dem Namen "Selektives Lasersintern oder Laserschmelzen" bekannt. Dabei wird wiederholt eine dünne Schicht eines pulverförmigen Aufbaumaterials aufgebracht und das Aufbaumaterial in jeder Schicht durch selektives Bestrahlen mit einem Laserstrahl selektiv verfestigt.

DE 10 2005 022 308 A1 beschreibt eine Lasersintervorrichtung, bei der das pulverförmige Aufbaumaterial mittels eines über ein Baufeld hin und her bewegbaren Beschichters in Form einer aus zwei steifen Klingen bestehenden Doppelklinge aufgebracht wird. Der Beschichter wird zunächst aus einem Vorratsbehälter mit einer zum Aufbringen einer Schicht ausreichenden Menge des Aufbaumaterials gefüllt und verfährt dann über das Baufeld, wobei das in ihm aufgenommene Pulver zu einer dünnen Pulverschicht ausgezogen wird. Der Beschichter enthält weiter eine Beschichterheizung in Form von in den Beschichterklingen angeordneten Heizdrähten sowie eine in dem Beschichter integrierte Fluidisierungseinrichtung, mit denen das das pulverförmige Material unmittelbar vor dem Auftragen vorgeheizt und fluidisiert werden kann.

Beim Verfahren des Beschichters sinkt durch Aufbringen der Pulverschicht der Füllstand des in ihm aufgenommenen Pulvers. Dadurch sinkt auch der statische Druck am Grund des Beschichters, wodurch es zu einer Änderung der Auftragsbedingungen des Pulvers und somit einer Reduzierung der Homogenität und der aufgebrachten Pulverschicht und dadurch der Qualität des hergestellten Objekts kommen kann.

Die.EP 2859 973 A1 offenbart einen Beschichter der zum Ausziehen einer Pulvermaterialschicht einen Pulvermaterialauslass mit zwei in Bewegungsrichtung dem Pulvermaterialauslass vor- und nachgelagerte Beschichtungselemente aufweist, um das Pulvermaterial in den zwei Bewegungsrichtungen ausziehen zu können. Alternativ kann auch nur ein Beschichtungselement verwendet werden, das zwischen zwei nebeneinander befindlichen, separaten Pulvermaterialaufnahmeräumen angeordnet ist. Als weitere Alternative wird ein Beschichtungselement vorgeschlagen, dass relativ zum Pulvermaterialauslass bewegt werden kann.

Die Aufgabe der vorliegenden Erfindung besteht darin, eine alternative bzw. verbesserte Vorrichtung bzw. ein alternatives bzw. verbessertes Verfahren zum Herstellen eines dreidimensionalen Objekts durch schichtweises Aufbringen und selektives Verfestigen eines pulverförmigen Aufbaumaterials bereitzustellen.

Diese Aufgabe wird gelöst durch eine Beschichtungseinrichtung gemäß Anspruch 1 und ein Verfahren gemäß Anspruch 9.

Weiterbildungen der Erfindung sind jeweils in den Unteransprüchen angegeben. Dabei kann das Verfahren auch durch die untenstehenden bzw. in den Unteransprüchen ausgeführten Merkmale der Vorrichtungen weitergebildet sein oder umgekehrt, bzw. die Merkmale der Vorrichtungen können auch jeweils untereinander zur Weiterbildung genutzt werden.

Die erfindungsgemäße Beschichtungseinheit dient zum Aus- und/oder Nachrüsten einer Vorrichtung zum Herstellen eines dreidimensionalen Objekts durch selektives schichtweises Verfestigen von pulverförmigem Aufbaumaterial, wobei die Vorrichtung einen über ein Baufeld bewegbaren Beschichter zum Aufbringen einer Schicht des Aufbaumaterials auf das Baufeld und eine Verfestigungsvorrichtung zum selektiven Verfestigen der aufgebrachten Schicht an Stellen, die einem Querschnitt des herzustellenden Objekts entsprechen, enthält und dazu ausgebildet und/oder gesteuert ist, die Schritte des Aufbringens und des selektiven Verfestigens zu wiederholen, bis das Objekt fertiggestellt ist. Die Beschichtungseinheit enthält zwei in einer ersten Richtung voneinander beabstandete und sich in eine Richtung quer zu der ersten Richtung erstreckende Auftragsklingen, die in der ersten Richtung und ihrer Gegenrichtung einen Aufnahmeraum für das pulverförmige Aufbaumaterial begrenzen, und eine Zwischenwand, die zwischen den beiden Auftragsklingen in der ersten Richtung von beiden Auftragsklingen beabstandet angeordnet ist und sich in eine Richtung quer zu der ersten Richtung erstreckt, wodurch der Aufnahmeraum für das Aufbaumaterial in zwei Kammern unterteilt ist. Die Beschichtungseinheit ist dazu eingerichtet, je nach Bewegung der Beschichtungseinheit in die erste Richtung oder in ihre Gegenrichtung Aufbaumaterial in der in der jeweiligen Bewegungsrichtung nachlaufenden Kammer aufzunehmen und das in der jeweils nachlaufenden Kammer aufgenommene Aufbaumaterial mit der jeweils nachlaufenden Klinge zu einer gleichmäßigen Schicht auszuziehen. Durch diese Beschichtungseinheit wird beispielsweise erreicht, dass die Homogenität und Gleichmäßigkeit der aufgebrachten Pulverschicht verbessert werden kann und dass sichergestellt werden kann, dass an allen Stellen genügend Pulver für die Beschichtung zur Verfügung steht.

Vorzugsweise ist in und/oder an zumindest einer der Auftragsklingen und/oder der Zwischenwand eine Fluidisierungseinrichtung angeordnet, die zum Fluidisieren des in einer der beiden Kammern aufgenommenen Aufbaumaterials geeignet ist. Dadurch wird das pulverförmige Aufbaumaterial beweglicher und kann beispielsweise prozessstabiler, also beispielsweise scherungsärmer, aufgetragen werden und in einer Richtung quer zu der Beschichtungsrichtung besser zu Stellen mit erhöhtem Pulverbedarf nachlaufen.

Vorzugsweise enthält die Beschichtungseinheit ein vorzugsweise an der Zwischenwand schwenkbar angebrachtes Leitblech zum Leiten von zugeführtem Aufbaumaterial in eine der beiden Kammern. Dadurch kann beispielsweise ein einfaches Umleiten von Pulver je nach Beschichtungsrichtung durchgeführt werden.

Vorzugsweise enthält die Beschichtungseinheit eine Welle mit Exzenter, die so angeordnet ist, dass durch ihre Drehung das Leitblech geschwenkt werden kann. Dadurch kann beispielsweise das Leitblech einfach von einer Position in eine andere gebracht werden.

Der erfindungsgemäße Beschichter dient zum Aus- und/oder Nachrüsten einer Vorrichtung zum Herstellen eines dreidimensionalen Objekts durch selektives schichtweises Verfestigen von pulverförmigem Aufbaumaterial, wobei die Vorrichtung daran angepasst ist, den Beschichter so aufzunehmen, dass er über ein Baufeld bewegbar ist zum Aufbringen einer Schicht des Aufbaumaterials auf das Baufeld, eine Verfestigungsvorrichtung zum selektiven Verfestigen der aufgebrachten Schicht an Stellen, die einem Querschnitt des herzustellenden Objekts entsprechen, enthält und dazu ausgebildet und/oder gesteuert ist, die Schritte des Aufbringens und des selektiven Verfestigens zu wiederholen, bis das Objekt fertiggestellt ist. Der Beschichter enthält eine erfindungsgemäße Beschichtungseinheit. Dadurch lassen sich beispielsweise die oben für die Beschichtungseinheit aufgeführten Wirkungen mit einem Beschichter erzielen, der die Beschichtungseinheit fest oder als auswechselbares Modul umfasst.

Vorzugsweise enthält der Beschichter weiter eine Pulveraustragseinheit, die bevorzugt mit der Beschichtungseinheit gemeinsam bewegbar realisiert ist. Dadurch kann beispielsweise Pulver in die Beschichtungseinheit des Beschichters nachdosiert werden.

Vorzugsweise enthält der Beschichter weiter ein, vorzugsweise an der Zwischenwand der Beschichtungseinheit, schwenkbar angebrachtes Leitblech zum Leiten von zugeführtem Aufbaumaterial in eine der beiden Kammern der Beschichtungseinheit und eine Welle mit Exzenter, die so angeordnet ist, dass durch ihre Drehung das Leitblech geschwenkt werden kann, wobei die Welle mit Exzenter in ihrer Bewegung zumindest teilweise mit einer Bewegung einer Dosiereinrichtung, beispielsweise einer Dosierwelle, der Pulveraustragseinheit gekoppelt ist. Zusätzlich zu den oben für das Leitblech und die Welle mit Exzenter aufgeführten Wirkungen kann dadurch beispielsweise die Anzahl der getrennten Antriebe für den Betrieb des Beschichters verringert werden.

Die erfindungsgemäße Vorrichtung dient zum Herstellen eines dreidimensionalen Objekts durch selektives schichtweises Verfestigen von pulverförmigem Aufbaumaterial und enthält einen über ein Baufeld in einer ersten Richtung und/oder ihrer Gegenrichtung bewegbaren Beschichter zum Aufbringen einer Schicht des Aufbaumaterials auf das Baufeld und eine Verfestigungsvorrichtung zum selektiven Verfestigen der aufgebrachten Schicht an Stellen, die einem Querschnitt des herzustellenden Objekts entsprechen. Die Vorrichtung ist ausgebildet und/oder gesteuert, die Schritte des Aufbringens und des selektiven Verfestigens zu wiederholen, bis das Objekt fertiggestellt ist. Der in der Vorrichtung enthaltene Beschichter enthält eine Beschichtungseinheit, wie sie oben beschrieben ist, und/oder ist als Beschichter ausgebildet, wie er oben beschrieben ist. Dadurch lassen sich beispielsweise die oben für die Beschichtungseinheit und den Beschichter aufgeführten Wirkungen auch mit einer Vorrichtung zum Herstellen eines dreidimensionalen Objekts erzielen, die die Beschichtungseinheit und/oder den Beschichter umfasst.

Das erfindungsgemäße Verfahren dient zum Herstellen eines dreidimensionalen Objekts durch schichtweises Aufbringen und selektives Verfestigen eines pulverförmigen Aufbaumaterials. Das Verfahren enthält die Schritte Aufbringen einer Schicht des pulverförmigen Aufbaumaterials auf ein Baufeld mittels eines in einer ersten Richtung und/oder ihrer Gegenrichtung über das Baufeld fahrenden Beschichters, selektives Verfestigen der aufgebrachten Pulverschicht an Stellen, die einem Querschnitt des herzustellenden Objekts entsprechen, Wiederholen der Schritte des Aufbringens und des selektiven Verfestigens, bis das Objekt fertiggestellt ist. Der Schritt des Aufbringens wird mit Hilfe einer von dem Beschichter umfassten Beschichtungseinheit durchgeführt, die zwei in der ersten Richtung voneinander beabstandete und sich in eine Richtung quer zu der ersten Richtung erstreckende Auftragsklingen, die in der ersten Richtung und ihrer Gegenrichtung einen Aufnahmeraum für das pulverförmige Aufbaumaterial begrenzen, und eine Zwischenwand, die zwischen den beiden Auftragsklingen in der ersten Richtung von beiden Auftragsklingen beabstandet angeordnet ist und sich in eine Richtung quer zu der ersten Richtung erstreckt, wodurch der Aufnahmeraum für das Aufbaumaterial in zwei Kammern unterteilt ist, enthält. Die Beschichtungseinheit nimmt je nach Bewegung des Beschichters in die erste Richtung oder in ihre Gegenrichtung Aufbaumaterial in der in der jeweiligen Bewegungsrichtung nachlaufenden Kammer auf und zieht das in der jeweils nachlaufenden Kammer aufgenommene Aufbaumaterial mit der jeweils nachlaufenden Klinge zu einer gleichmäßigen Schicht aus. Dadurch lassen sich beispielsweise die oben für die Beschichtungseinheit aufgeführten Wirkungen bei einem Verfahren zum Herstellen eines dreidimensionalen Objekts erzielen.

Vorzugsweise wird das in der jeweils nachlaufenden Kammer aufgenommene Aufbaumaterial während des Verfahrens des Beschichters fluidisiert. Dadurch wird das pulverförmige Aufbaumaterial beweglicher und kann beispielsweise prozessstabiler aufgetragen werden und in einer Richtung quer zu der Beschichtungsrichtung besser zu Stellen mit erhöhtem Pulverbedarf nachlaufen.

Vorzugsweise wird der Beschichtungseinheit während ihres Verfahrens über das Baufeld kontinuierlich oder in Intervallen pulverförmiges Aufbaumaterial aus einem mit der Beschichtungseinheit mitfahrenden oder getrennt von ihm über das Baufeld verfahrenden Pulveraustragsmodul zugeführt. Dadurch kann beispielsweise Pulver in die Beschichtungseinheit des Beschichters nachdosiert werden.

Vorzugsweise wird das pulverförmige Aufbaumaterial von dem mitfahrenden Pulveraustragsmodul so dosiert, dass ein Pulverstand in der jeweils nachlaufenden Kammer annähernd konstant bleibt. Dadurch kann beispielsweise der Druck am Grunde des Pulvers annähernd konstant gehalten und darüber die Qualität, insbesondere die Homogenität, der aufgebrachten Schicht verbessert werden.

Vorzugsweise liegt eine Unterseite der Zwischenwand der Beschichtungseinheit auf einem niedrigeren Niveau als mindestens eine der Unterseiten der beiden Auftragsklingen. Dadurch kann beispielsweise ein Ausfließen von Pulver vor die Zwischenwand vermieden werden.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte Ansicht einer Vorrichtung zum schichtweisen Herstellen eines dreidimensionalen Objekts gemäß einer Ausführungsform der vorliegenden Erfindung.
- Fig. 2: ist eine vergrößerte schematische Teilschnittansicht der in Fig. 1 gezeigten Vorrichtung und zeigt unter anderem einen Beschichter bei einer Bewegung in einer ersten Richtung über ein Baufeld.
- Fig. 3: ist eine vergrößerte schematische Teilschnittansicht der in Fig. 1 gezeigten Vorrichtung und zeigt unter anderem den Beschichter bei einer Bewegung in einer zweiten Richtung über das Baufeld.

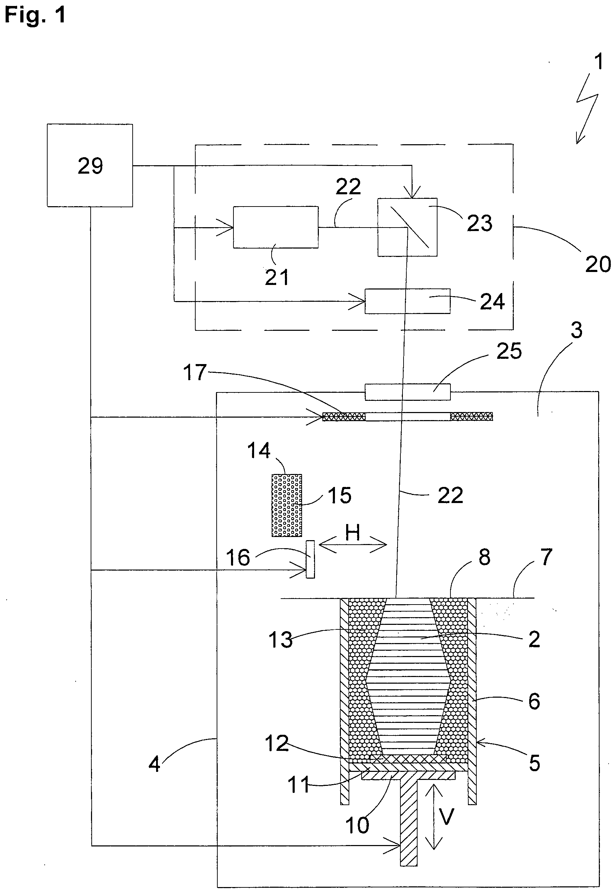

Im Folgenden wird mit Bezug auf Fig. 1 bis 3 eine Vorrichtung 1 gemäß einer Ausführungsform der vorliegenden Erfindung beschrieben. Die in Fig. 1 dargestellte Vorrichtung ist eine Lasersinter- oder Laserschmelzvorrichtung 1. Zum Aufbauen eines Objekts 2 enthält sie eine Prozesskammer 3 mit einer Kammerwandung 4.

In der Prozesskammer 3 ist ein nach oben offener Behälter 5 mit einer Behälterwandung 6 angeordnet. Durch die obere Öffnung des Behälters 5 ist eine Arbeitsebene 7 definiert, wobei der innerhalb der Öffnung liegende Bereich der Arbeitsebene 7, der zum Aufbau des Objekts 2 verwendet werden kann, als Baufeld 8 bezeichnet wird.

In dem Behälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 gebildet sein. Je nach verwendetem Pulver und Prozess kann auf der Grundplatte 11 noch eine Bauplattform 12 angebracht sein, auf der das Objekt 2 aufgebaut wird. Das Objekt 2 kann aber auch auf der Grundplatte 11 selber aufgebaut werden, die dann als Bauplattform dient. In Fig. 1 ist das in dem Behälter 5 auf der Bauplattform 12 zu bildende Objekt 2 unterhalb der Arbeitsebene 7 in einem Zwischenzustand dargestellt mit mehreren verfestigten Schichten, umgeben von unverfestigt gebliebenem Aufbaumaterial 13.

Die Lasersintervorrichtung 1 enthält weiter einen Vorratsbehälter 14 für ein durch elektromagnetische Strahlung verfestigbares pulverförmiges Aufbaumaterial 15 und einen in einer horizontalen Richtung H bewegbaren Beschichter 16 zum Aufbringen des Aufbaumaterials 15 auf das Baufeld 8. In der Prozesskammer ist ferner eine Strahlungsheizung 17 angeordnet, die zum Beheizen des auf das Baufeld 8 aufgebrachten Aufbaumaterials 15 dient. Die Strahlungsheizung 17 ist beispielsweise als Infrarotstrahler gebildet.

Die Lasersintervorrichtung 1 enthält ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 über ein Einkoppelfenster 25, das an der Oberseite der Prozesskammer 3 in deren Wandung 4 angebracht ist, auf die Arbeitsebene 7 fokussiert wird.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Die Steuereinheit kann auch teilweise oder ganz außerhalb der Vorrichtung angebracht sein. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit geladen werden kann.

Im Betrieb wird zum Aufbringen einer Pulverschicht zunächst der Träger 10 um eine Höhe abgesenkt, die der gewünschten Schichtdicke entspricht. Durch Verfahren des Beschichters 16 über die Arbeitsebene 7 wird dann eine Schicht des pulverförmigen Aufbaumaterials 15 aufgebracht. Das Aufbringen erfolgt zumindest über den gesamten Querschnitt des herzustellenden Objekts 2, vorzugsweise über das gesamte Baufeld 8, also den Bereich der Arbeitsebene 7, der durch eine Vertikalbewegung des Trägers abgesenkt werden kann. Anschließend wird das pulverförmige Aufbaumaterial durch die Strahlenheizung 17 aufgeheizt. Nach Erreichen einer Arbeitstemperatur wird der Querschnitt des herzustellenden Objekts 2 von dem Laserstrahl 22 abgetastet, so dass das pulverförmige Aufbaumaterial 15 an den Stellen verfestigt wird, die dem Querschnitt des herzustellenden Objekts 2 entsprechen. Diese Schritte werden solange wiederholt, bis das Objekt 2 fertiggestellt ist und dem Bauraum entnommen werden kann.

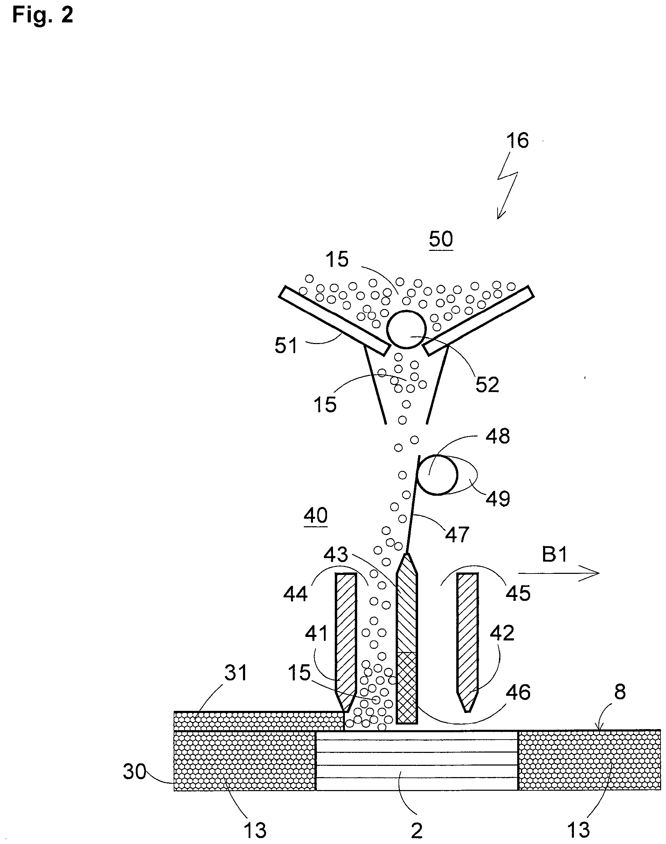

Fig. 2 ist eine schematische, nicht maßstäbliche Teilschnittansicht eines Bereichs innerhalb der Prozesskammer 3 der in Fig. 1 dargestellten Vorrichtung 1. Insbesondere zeigt Fig. 2 den Beschichter 16 bei einer Bewegung in einer ersten Beschichtungsrichtung B1 über das Baufeld 8.

In einem durch vorangegangene Prozessschritte aufgebauten Pulverbett 30 ist der verfestigte Teil des herzustellenden Objekts 2 von unverfestigt gebliebenem Pulver 13 umgeben. Auf die zuletzt aufgebrachte und selektiv verfestigte Pulverschicht wird nun mittels der Bewegung des Beschichters 16 in der ersten Beschichtungsrichtung B1 eine weitere Pulverschicht 31 des Aufbaumaterials 15 aufgetragen.

Dazu enthält der Beschichter eine Beschichtungseinheit 40 und eine Pulveraustragseinheit 50.

Die Beschichtungseinheit 40 enthält eine erste Klinge 41 und eine zweite Klinge 42, die in der ersten Beschichtungsrichtung B1 voneinander beabstandet sind. Diese beiden Klingen 41, 42 schließen einen Zwischenraum in der ersten Beschichtungsrichtung B1 und in ihrer Gegenrichtung zumindest teilweise ab. Dieser durch die beiden Klingen 41, 42 begrenzte Zwischenraum ist dazu ausgebildet, einen Vorrat an pulverförmigem Aufbaumaterial 15 aufzunehmen. Zwischen den beiden Klingen 41, 42 und von ihnen in der ersten Beschichtungsrichtung B1 beabstandet ist eine Zwischenwand 43 angeordnet, die den Zwischenraum in der ersten Beschichtungsrichtung B1 in eine erste Kammer 44 und eine zweite Kammer 45 unterteilt. Quer, vorzugsweise senkrecht zu der Beschichtungsrichtung B erstrecken sich die beiden Klingen 41, 42 und damit auch der von ihnen begrenzte Zwischenraum über die gesamte Breite des zu beschichtenden Bereichs, vorzugsweise über das gesamte Baufeld 8.

In oder an der Zwischenwand 43 ist eine Fluidisierungseinrichtung 46 angeordnet, mit der Aufbaumaterial in den beiden Kammern fluidisiert werden kann. Dabei wird ein Gas in die jeweilige Kammer geleitet und erzeugt ein Wirbelbett des pulverförmigem Aufbaumaterials, das heißt das Gas versetzt das Aufbaumaterial einen wirbelbett- bzw. fließbettähnlichen Zustand. Vorzugsweise ist das Gas vorgewärmt.

Oberhalb der Zwischenwand 43 ist ein Leitblech 47 schwenkbar so angeordnet, dass es der Beschichtungseinheit 40 von der Pulveraustragseinheit 50 zugeführtes Aufbaumaterial in eine der beiden Kammern 44, 45 leitet. Vorzugsweise ist das Leitblech 47 schwenkbar an der Zwischenwand 43 angebracht.

Weiter ist in dem Beschichter 16 eine Welle 48 mit Exzenter 49 so angeordnet, dass durch ihre Drehung das Leitblech 47 zwischen den zwei Stellungen geschwenkt werden kann, in denen es das Aufbaumaterial in die erste Kammer 44 bzw. in die zweite Kammer 45 leitet.

Die Pulveraustragseinheit 50 enthält einen in der vorliegenden Ausführungform im Querschnitt trichterförmigen Pulveraufnahmebehälter 51, der zur Aufnahme einer vorbestimmten Menge pulverförmigen Aufbaumaterials 15 geeignet ist, und eine Dosiereinrichtung 52, beispielsweise in Form einer Dosierwelle, mittels derer pulverförmiges Aufbaumaterial dosiert an die Beschichtungseinheit 40 abgegeben werden kann. Vorzugsweise enthält die Pulveraustragseinheit 50 eine (nicht gezeigte) lokale Strahlungsheizung zum Vorwärmen des Aufbaumaterials 15 und/oder eine (nicht gezeigte) Fluidisierungseinrichtung zum Fluidisieren des Aufbaumaterials 15.

Die Pulveraustragseinheit 50 und die Beschichtungseinheit 40 sind vorzugsweise gemeinsam miteinander über die Arbeitsebene verfahrbar angeordnet, die Pulveraustragseinheit 50 kann aber auch getrennt von der Beschichtungseinheit 40 verfahrbar sein.

Zum Aufbringen der neuen Pulverschicht 31 fährt zunächst der Beschichter 16 oder zumindest die Pulveraustragseinheit 50 zu dem Vorratsbehälter 14 und nimmt eine vorbestimmte Menge des pulverförmigem Aufbaumaterials 15 in den Behälter 51 auf. Diese vorbestimmte Pulvermenge ist vorzugsweise zumindest so groß, in weiter bevorzugter Weise größer als die Pulvermenge, die zum Auftragen einer Schicht 31 des pulverförmigen Aufbaumaterials 15 benötigt wird.

Vorzugsweise wird das in den Behälter 51 aufgenommene Pulver 15 mittels der lokalen Strahlungsheizung vorgeheizt und/oder durch Einleiten eines vorzugsweise beheizten Gases fluidisiert.

Dann fährt die Pulveraustragseinheit 50 gemeinsam mit der Beschichtungseinheit 40 in der ersten Beschichtungsrichtung B1 über das Baufeld 8 und gibt dabei Pulver 15 mittels der Dosiervorrichtung 52 an die in der ersten Beschichtungsrichtung über das Baufeld 8 fahrende Beschichtungseinheit 40 ab. Diese Pulverabgabe kann kontinuierlich oder in Intervallen erfolgen. Bei einer Abgabe in Intervallen braucht die Pulveraustragseinheit 50 nicht gemeinsam mit der Beschichtungseinheit 40 verfahren zu werden, sondern muss nur zu den Zeitpunkten der Pulverabgabe am Ort der Beschichtungseinheit 40 zu stehen.

Das von der Pulveraustragseinheit 50 abgegebene Aufbaumaterial fällt durch sein Eigengewicht nach unten und trifft auf das Leitblech 47, das in Fig. 2 in seiner Ruhelage gezeigt ist. über das Leitblech 47 rutscht das Pulver in die erste Kammer 44, die in der ersten Bewegungsrichtung B1 die nachlaufende Kammer ist. In der ersten Kammer 4-4 wird das Aufbaumaterial fluidisiert und von der ersten Klinge 41, die in der ersten Bewegungsrichtung B1 die nachlaufende Klinge ist, zu einer gleichmäßigen Pulverschicht 31 ausgezogen.

Vorzugsweise wird das pulverförmige Aufbaumaterial von dem Pulveraustragsmodul so dosiert, dass ein Pulverstand in der ersten Kammer 44 annähernd konstant bleibt. Dadurch bleibt auch der Druck der Pulversäule 15 auf das Pulverbett 30 annähernd konstant, was zu gleichmäßigeren Auftragsbedingungen und somit zu einer besseren Homogenität und Qualität der aufgetragenen Pulverschicht 31 führt.

Eine weitere Qualitätsverbesserung der aufgetragenen Pulverschicht 31 wird dadurch erzielt, dass ein Ausfließen von Pulver vor die in der ersten Beschichtungsrichtung B1 vorne liegende zweite Klinge 42 verhindert wird. Bei einer Beschichtungseinheit ohne Zwischenwand füllt das Pulver den ganzen Bereich zwischen den zwei Klingen aus. Da die Unterseite beider Klingen auf gleicher Höhe liegt, hat die in der Beschichtungsrichtung vorne liegende Klinge von dem Pulverbett einen Abstand, der der Dicke der aufgetragenen Pulverschicht entspricht. Somit ist es leicht möglich, dass ein Teil des durch die Fluidisierung sehr beweglichen Pulvers vor die vordere Klinge austritt. Dieses Pulver würde dann beim Darüberfahren des Beschichters durch beide Klingen verdichtet, was zu unerwünschten Wirkungen führen kann.

Bei der vorliegenden Beschichtungseinheit mit Zwischenwand gelangt das Pulver jedoch gar nicht zu der vorderen Klinge und kann daher nicht ausfließen. Außerdem kann die Unterseite der Zwischenwand 43, die unabhängig von der Beschichtungsrichtung nie über die gerade neu aufgetragene Pulverschicht 31 verfährt, auf einem niedrigeren Niveau liegen als die Unterseiten der beiden Klingen 41, 42. Dadurch wird auch einem Ausfließen von Pulver vor die Zwischenwand 43 wirkungsvoll entgegengewirkt.

Bei hoher Beschichtungsgeschwindigkeit wirkt auch die Trägheitskraft des in der ersten Kammer 44 aufgenommenen Pulvers 15 dem Ausfließen vor die Zwischenwand entgegen.

Beim Verfestigen von pulverförmigem Aufbaumaterial 15 durch Strahlung 22 ergibt sich oft eine Volumenreduktion, so dass an der Oberfläche des Pulverbetts an den verfestigten Stellen leichte Einsenkungen auftreten. An diesen Stellen wird dann beim Auftreten der nächsten Pulverschicht mehr Aufbaumaterial benötigt als an anderen Stellen. Durch das Fluidisieren des Aufbaumaterials 15 in der ersten Kammer 44 kann das Aufbaumaterial 15 jedoch in einer Richtung quer zu der Beschichtungsrichtung in Bereiche mit erhöhtem Pulverbedarf nachlaufen, ohne dass es dort zu einem Pulvermangel kommt.

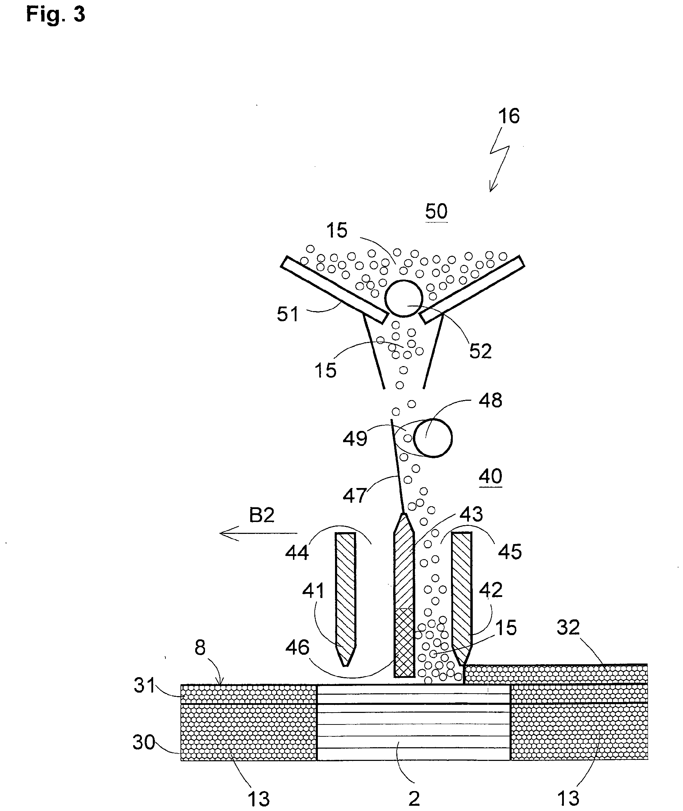

Fig. 3 ist eine schematische, nicht maßstäbliche Teilschnittansicht eines Bereichs innerhalb der Prozesskammer 3 der in Fig. 1 dargestellten Vorrichtung 1. Insbesondere zeigt Fig. 2 den Beschichter 16 bei einer Bewegung in einer zweiten Beschichtungsrichtung B2 über das Baufeld 8, die der ersten Beschichtungsrichtung B1 entgegengesetzt ist.

Dabei bedeutet entgegengesetzt nicht unbedingt einen Winkel von 180° in einer Draufsicht auf die Arbeitsebene, sondern nur, dass die zweite Beschichtungsrichtung B2 eine Komponente hat, die in die Gegenrichtung der ersten Beschichtungsrichtung B1 zeigt. Vorzugsweise liegt der Winkel zwischen der ersten und der zweiten Beschichtungsrichtung zwischen 15 und 210 Grad, in weiter bevorzugter Weise beträgt er 180°.

Auf der selektiv verfestigten Pulverschicht 31 wird nun in der zweiten Bewegungsrichtung B2 eine weitere Pulverschicht 32 aufgetragen. Das erfolgt im Wesentlichen genau so wie bei der ersten Pulverschicht 31, so dass hier nur die Unterschiede beschrieben werden.

Zunächst fährt der Beschichter 16 oder zumindest die Pulveraustragseinheit 50 zu einem in Fig. 1 nicht gezeigten Vorratsbehälter, der auf der dem Vorratsbehälter 14 gegenüberliegenden Seite des Baufelds 8 angeordnet ist, und nimmt eine vorbestimmte Menge des pulverförmigem Aufbaumaterial 15 in den Behälter 51 auf. Alternativ dazu kann die Pulveraustragseinheit 50 auch vor dem Auftragen der Pulverschicht 31 eine Pulvermenge aufnehmen, die für die beiden Pulverschichten 31, 32 ausreicht.

Dann gibt die Pulveraustragseinheit 50 mittels der Dosiervorrichtung 42 wieder kontinuierlich oder in Intervallen Pulver 15 an die in der der zweiten Beschichtungsrichtung B2 über das Baufeld 8 fahrende Beschichtungseinheit 40 ab.

Bei einer Fahrt in die zweite Beschichtungsrichtung B2 wird das Leitblech 47 über eine Drehung der Welle 48 durch den an der Welle 48 angebrachten Exzenter 49 in eine Stellung gebracht, in der das auf das Leitblech 47 auftreffende Pulver in die zweite Kammer 45 geleitet wird, die in der zweiten Bewegungsrichtung B2 die nachlaufende Kammer ist. In der zweiten Kammer 45 wird das Aufbaumaterial fluidisiert und von der zweiten Klinge 42, die in der zweiten Bewegungsrichtung B2 die nachlaufende Klinge ist, zu einer gleichmäßigen Pulverschicht 32 ausgezogen.

Je nach Beschichtungsrichtung wird das von der Pulveraustragseinheit 50 abgegebene Aufbaumaterial also immer in die nachlaufende Kammer aufgenommen und mit der nachlaufenden Klinge zu einer gleichmäßigen Schicht ausgezogen.

Bei erneutem Verfahren des Beschichters in der ersten Beschichtungsrichtung zum Auftragen der nächsten Pulverschicht wird die Welle 48 wieder in die in Fig. 2 gezeigte Stellung gedreht, und das Leitblech 47 kehrt durch eine nicht gezeigte Rückstelleinrichtung wie z.B. eine Feder oder durch eine Führung durch den Exzenter 49 wieder in seine Ausgangslage zurück.

Um keinen eigenen Antrieb für das Drehen der Welle 48 zu benötigen, kann die Welle 48 in ihrer Bewegung zumindest teilweise mit einer Bewegung der Dosiereinrichtung 52 der Pulveraustragseinheit 50, beispielsweise einer Dosierwelle, gekoppelt sein.

In der oben beschriebenen Ausführungsformen ist die Beschichtungseinheit ein fester Bestandteil des Beschichters. Sie kann aber auch als von dem Beschichter getrenntes Beschichtungsmodul ausgebildet sein, das dazu eingerichtet ist, an dem Beschichter mit diesem verfahrbar so angebracht zu werden, dass die Richtung, in der die Klingen und die Zwischenwand voneinander beabstandet sind, mit der Richtung übereinstimmt, in der der Beschichter über die Arbeitsebene bewegbar ist.

Die Fluidisierungseinrichtung der Beschichtungseinheit kann alternativ oder zusätzlich zu der Zwischenwand auch in oder an einer der Klingen oder beiden Klingen angeordnet sein.

Anstelle von Klingen können auch andere Beschichtungselemente zum Auftragen einer Schicht des Aufbaumaterials verwendet werden, beispielsweise solche, die an ihrer Unterseite eine Walze enthalten.

Auch wenn die vorliegende Erfindung anhand einer Lasersinter- bzw. Laserschmelzvorrichtung beschrieben wurde, ist sie nicht auf das Lasersintern oder Laserschmelzen eingeschränkt. Sie kann auf beliebige Verfahren zum Herstellen eines dreidimensionalen Objektes durch schichtweises Aufbringen und selektives Verfestigen eines pulverförmigen Aufbaumaterials angewendet werden.

Der Belichter kann beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser), bzw. eine Zeile dieser Laser umfassen. Allgemein kann als Belichter jede Einrichtung verwendet werden, mit der Energie als Wellen- oder Teilchenstrahlung selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen. Statt des Ablenkens eines Strahls kann auch das Belichten mit einem verfahrbaren Zeilenbelichter angewendet werden. Auch auf das selektive Maskensintern, bei dem eine ausgedehnte Lichtquelle und eine Maske verwendet werden, oder auf das High-Speed-Sintern (HSS), bei dem auf dem Aufbaumaterial selektiv ein Material aufgebracht wird, das die Strahlungsabsorption an den dem Objektquerschnitt entsprechenden Stellen erhöht (Absorptionssintern) oder verringert (Inhibitionssintern), und dann unselektiv großflächig oder mit einem verfahrbaren Zeilenbelichter belichtet wird, kann die Erfindung angewendet werden.

Anstelle des Einbringens von Energie kann das selektive Verfestigen des aufgetragenen Aufbaumaterials auch durch 3D-Drucken erfolgen, beispielsweise durch Aufbringen eines Klebers. Allgemein bezieht sich die Offenbarung auf das Herstellen eines Objekts mittels schichtweisen Auftragens und selektiven Verfestigens eines Aufbaumaterials unabhängig von der Art und Weise, in der das Aufbaumaterial verfestigt wird.

Als Aufbaumaterial können verschiedene Arten von Pulver verwendet werden, insbesondere Metallpulver, Kunststoffpulver, Keramikpulver, Sand, gefüllte oder gemischte Pulver.

## Patentansprüche

1. Beschichtungseinheit (40) zum Aus- und/oder Nachrüsten einer Vorrichtung (1) zum Herstellen eines dreidimensionalen Objekts (2) durch selektives schichtweises Verfestigen von pulverförmigem Aufbaumaterial (15), wobei die Vorrichtung (1) einen über ein Baufeld (8) bewegbaren Beschichter (16) zum Aufbringen einer Schicht (31) des Aufbaumaterials (15) auf das Baufeld (8) und eine Verfestigungsvorrichtung (20) zum selektiven Verfestigen der aufgebrachten Schicht (31) an Stellen, die einem Querschnitt des herzustellenden Objekts (2) entsprechen, enthält und dazu ausgebildet und/oder gesteuert ist, die Schritte des Aufbringens und des selektiven Verfestigens zu wiederholen, bis das Objekt fertiggestellt ist,
wobei die Beschichtungseinheit (40) enthält:
zwei in einer ersten Richtung (B1) voneinander beabstandete und sich in eine Richtung quer zu der ersten Richtung erstreckende Beschichtungselemente (41, 42), die in der ersten Richtung (B1) und ihrer Gegenrichtung (B2) einen Aufnahmeraum für das pulverförmige Aufbaumaterial (15) begrenzen, und
eine Zwischenwand (43), die zwischen den beiden Beschichtungselementen (41, 42) in der ersten Richtung (B1) von beiden Beschichtungselementen (41, 42) beabstandet angeordnet ist und sich in eine Richtung quer zu der ersten Richtung (B1) erstreckt, wodurch der Aufnahmeraum für das Aufbaumaterial (15) in zwei Kammern (44, 45) unterteilt ist,
wobei die Beschichtungseinheit (40) dazu eingerichtet ist:
je nach Bewegung der Beschichtungseinheit (40) in die erste Richtung (B1) oder in ihre Gegenrichtung (B2) Aufbaumaterial in der in der jeweiligen Bewegungsrichtung nachlaufenden Kammer (44, 45) aufzunehmen und
das in der jeweils nachlaufenden Kammer (44, 45) aufgenommene Aufbaumaterial (15) mit dem jeweils nachlaufenden Beschichtungselement (41, 42) zu einer gleichmäßigen Schicht (31) auszuziehen.

2. Beschichtungseinheit (40) gemäß Anspruch 1, bei der in und/oder an zumindest einem der Beschichtungselemente (41, 42) und/oder der Zwischenwand (43) eine Fluidisierungseinrichtung (46) angeordnet ist, die zum Fluidisieren des in einer der beiden Kammern (44, 45) aufgenommenen Aufbaumaterials (15) geeignet ist.

3. Beschichtungseinheit gemäß Anspruch 1 oder 2, die ein, vorzugsweise an der Zwischenwand (43), schwenkbar angebrachtes Leitblech (47) enthält zum Leiten von zugeführtem Aufbaumaterial (15) in eine der beiden Kammern (44, 45).

4. Beschichtungseinheit gemäß Anspruch 3, die eine Welle (48) mit Exzenter (49) enthält, die so angeordnet ist, dass durch ihre Drehung das Leitblech (47) geschwenkt werden kann.

5. Beschichter (16) zum Aus- und/oder Nachrüsten einer Vorrichtung (1) zum Herstellen eines dreidimensionalen Objekts (2) durch selektives schichtweises Verfestigen von pulverförmigem Aufbaumaterial (15), wobei die Vorrichtung (1) daran angepasst ist, den Beschichter (16) so aufzunehmen, dass er über ein Baufeld (8) bewegbar ist zum Aufbringen einer Schicht (31) des Aufbaumaterials (15) auf das Baufeld (8), eine Verfestigungsvorrichtung (20) zum selektiven Verfestigen der aufgebrachten Schicht (31) an Stellen, die einem Querschnitt des herzustellenden Objekts (2) entsprechen, enthält und dazu ausgebildet und/oder gesteuert ist, die Schritte des Aufbringens und des selektiven Verfestigens zu wiederholen, bis das Objekt (2) fertiggestellt ist,
wobei der Beschichter (16) eine Beschichtungseinheit (40) gemäß einem der Ansprüche 1 bis 4 umfasst.

6. Beschichter (16) gemäß Anspruch 5, weiter umfassend eine Pulveraustragseinheit (50), die bevorzugt mit der Beschichtungseinheit (40) gemeinsam bewegbar realisiert ist.

7. Beschichter gemäß Anspruch 6, umfassend:
ein, vorzugsweise an der Zwischenwand (43) der Beschichtungseinheit (40), schwenkbar angebrachtes Leitblech (47) zum Leiten von zugeführtem Aufbaumaterial (15) in eine der beiden Kammern (44, 45) der Beschichtungseinheit (40) und
eine Welle (48) mit Exzenter (49), die so angeordnet ist, dass durch ihre Drehung das Leitblech (47) geschwenkt werden kann,
wobei die Welle (48) mit Exzenter (49) in ihrer Bewegung zumindest teilweise mit einer Bewegung einer Dosiereinrichtung (52) der Pulveraustragseinheit (50) gekoppelt ist.

8. Vorrichtung (1) zum Herstellen eines dreidimensionalen Objekts (2) durch selektives schichtweises Verfestigen von pulverförmigem Aufbaumaterial (15), umfassend:
einen über ein Baufeld (8) in einer ersten Richtung (B1) und/oder ihrer Gegenrichtung (B2) bewegbaren Beschichter (16) zum Aufbringen einer Schicht (31) des Aufbaumaterials (15) auf das Baufeld (8) und
eine Verfestigungsvorrichtung (20) zum selektiven Verfestigen der aufgebrachten Schicht (31) an Stellen, die einem Querschnitt des herzustellenden Objekts (2) entsprechen,
wobei die Vorrichtung (1) ausgebildet und/oder gesteuert ist, die Schritte des Aufbringens und des selektiven Verfestigens zu wiederholen, bis das Objekt (2) fertiggestellt ist, und
wobei der Beschichter (16) eine Beschichtungseinheit (40) gemäß einem der Ansprüche 1 bis 4 enthält und/oder als Beschichter (16) gemäß einem der Ansprüche 5 bis 7 ausgebildet ist.

9. Verfahren zum Herstellen eines dreidimensionalen Objekts (2) durch schichtweises Aufbringen und selektives Verfestigen eines pulverförmigen Aufbaumaterials (15) mit den Schritten:
Aufbringen einer Schicht (31) des pulverförmigen Aufbaumaterials (15) auf ein Baufeld (8) mittels eines in einer ersten Richtung (B1) und/oder ihrer Gegenrichtung (B2) über das Baufeld (8) fahrenden Beschichters,
selektives Verfestigen der aufgebrachten Pulverschicht (31) an Stellen, die einem Querschnitt des herzustellenden Objekts (2) entsprechen, und
Wiederholen der Schritte des Aufbringens und des selektiven Verfestigens, bis das Objekt (2) fertiggestellt ist,
wobei der Schritt des Aufbringens mit Hilfe einer von dem Beschichter (16) umfassten Beschichtungseinheit (40) durchgeführt wird, die enthält:
zwei in der ersten Richtung (B1) voneinander beabstandete und sich in eine Richtung quer zu der ersten Richtung (B1) erstreckende Beschichtungselemente (41, 42), die in der ersten Richtung (B1) und ihrer Gegenrichtung (B2) einen Aufnahmeraum für das pulverförmige Aufbaumaterial (15) begrenzen, und
eine Zwischenwand (43), die zwischen den beiden Beschichtungselementen (42, 42) in der ersten Richtung (B1) von beiden Beschichtungselementen (41, 42) beabstandet angeordnet ist und sich in eine Richtung quer zu der ersten Richtung (B1) erstreckt, wodurch der Aufnahmeraum für das Aufbaumaterial in zwei Kammern (44, 45) unterteilt ist,
wobei die Beschichtungseinheit (40) je nach Bewegung des Beschichters in die erste Richtung (B1) oder in ihre Gegenrichtung (B2) Aufbaumaterial (15) in der in der jeweiligen Bewegungsrichtung nachlaufenden Kammer (44, 45) aufnimmt und
das in der jeweils nachlaufenden Kammer (44, 45) aufgenommene Aufbaumaterial (15) mit dem jeweils nachlaufenden Beschichtungselement (41, 42) zu einer gleichmäßigen Schicht auszieht.

10. Verfahren gemäß Anspruch 9, bei dem das in der jeweils nachlaufenden Kammer (44, 45) aufgenommene Aufbaumaterial (15) während des Verfahrens der Beschichtungseinheit (40) über das Baufeld (8) fluidisiert wird.

11. Verfahren gemäß Anspruch 9 oder 10, bei dem die Beschichtungseinheit (40) während ihres Verfahrens über das Baufeld (8) kontinuierlich oder in Intervallen pulverförmiges Aufbaumaterial (15) aus einem mit der Beschichtungseinheit (40) mitfahrenden oder getrennt von ihm über das Baufeld (8) verfahrenden Pulveraustragsmodul (50) zugeführt wird.

12. Verfahren gemäß Anspruch 11, bei dem das pulverförmige Aufbaumaterial (15) von dem Pulveraustragsmodul (50) so dosiert wird, dass ein Pulverstand in der jeweils nachlaufenden Kammer (44, 45) annähernd konstant bleibt.

13. Verfahren gemäß einem der Ansprüche 1 bis 12, bei dem eine Unterseite der Zwischenwand (43) der Beschichtungseinheit (40) auf einem niedrigeren Niveau liegt als mindestens eine der Unterseiten der beiden Beschichtungselemente (41, 42).

## Claims

1. A recoating unit (40) for equipping and/or retrofitting a device (1) for producing a three-dimensional object (2) by means of selectively solidifying, layer by layer, of a building material in powder form (15), wherein the device (1) comprises a recoater (16) that can be moved across a build area (8) for applying a layer (31) of the building material (15) to the build area (8) and a solidification device (20) for selectively solidifying the applied layer (31) at positions that correspond to a cross-section of the object (2) to be produced and which device (1) is configured and/or controlled to repeat the steps of applying and selectively solidifying until the object is completed,
wherein the recoating unit (40) comprises:
two recoating elements (41, 42) spaced apart from each other in a first direction (B1) and extending in a direction transverse to the first direction, which recoating elements confine a receiving space for the building material in powder form (15) in the first direction (B1) and in its opposite direction (B2) and
a partition wall (43) that is arranged between the two recoating elements (41, 42) and at a distance to the two recoating elements (41, 42) with respect to the first direction (B1) and which partition wall extends in a direction transverse to the first direction (B1), thus dividing the receiving space for the building material (15) into two chambers (44, 45),
wherein the recoating unit (40) is configured to:
depending on the recoating unit (40) moving in the first direction (B1) or in its opposite direction (B2), to receive building material in that chamber (44, 45) that is the trailing chamber in the respective direction of movement and
to spread the building material (15) received in the respective trailing chamber (44, 45) into a uniform layer (31) by means of the respective trailing recoating element (41, 42).

2. The recoating unit (40) according to claim 1, wherein a fluidization device (46) is arranged in and/or on at least one of the recoating elements (41, 42) and/or the partition wall (43), which fluidization device is suited to fluidize the building material (15) received in one of the two chambers (44, 45).

3. The recoating unit according to claim 1 or 2, which recoating unit comprises a guide plate (47) pivotably arranged preferably on the partition wall (43) for guiding supplied building material (15) into one of the two chambers (44, 45).

4. The recoating unit according to claim 3, comprising a shaft (48) with an eccentric (49), which shaft is arranged so that the guide plate (47) can be pivoted by rotating the shaft.

5. A recoater (16) for equipping and/or retrofitting a device (1) for producing a three dimensional object (2) by means of selectively solidifying, layer by layer, of a building material in powder form (15), wherein the device (1) is adapted to receive the recoater (16) such that it can be moved across a build area (8) for applying a layer (31) of the building material (15) to the build area (8), wherein the device (1) comprises a solidification device (20) for selectively solidifying the applied layer (31) at positions that correspond to a cross-section of the object (2) to be produced and which device (1) is configured and/or controlled to repeat the steps of applying and selectively solidifying until the object (2) is completed,
wherein the recoater (16) comprises a recoating unit (40) according to one of claims 1 to 4.

6. The recoater (16) according to claim 5, further comprising a powder discharge unit (50) that is preferably implemented to be movable together with the recoating unit (40).

7. The recoater (16) according to claim 6, comprising:
a guide plate (47) pivotably arranged, preferably on the partition wall (43) of the recoating unit (40), for guiding supplied building material (15) to one of the two chambers (44, 45) of the recoating unit (40) and
a shaft (48) with an eccentric (49), which shaft is arranged so that the guide plate (47) can be pivoted by rotating the shaft,
wherein the shaft (48) with the eccentric (49) is at least partially coupled in its movement with a movement of a metering device (52) of the powder discharge unit (50).

8. A device (1) for producing a three dimensional object (2) by means of selectively solidifying, layer by layer, of a building material in powder form (15), the device (1) comprising:
a recoater (16) that can be moved across a build area (8) in a first direction (B1) and/or its opposite direction (B2) for applying a layer (31) of the building material to the build area (8) and
a solidification device (20) for selectively solidifying the applied layer (31) at positions that correspond to a cross-section of the object (2) to be produced,
wherein the device (1) is configured and/or controlled to repeat the steps of applying and selectively solidifying until the object (2) is completed, and
wherein the recoater (16) comprises a recoating unit (40) according to one of claims 1 to 4 and/or the recoater is configured according to one of claims 5 to 7.

9. A method of producing a three dimensional object (2) by means of layer-wise applying and selectively solidifying a building material in powder form (15) with the steps of:
applying a layer (31) of the building material in powder form (15) to a build area (8) by means of a recoater moving across the build area (8) in a first direction (B1) and/or its opposite direction (B2),
selectively solidifying the applied powder layer (31) at positions that correspond to a cross-section of the object (2) to be produced and
repeating the steps of applying and selectively solidifying until the object (2) is completed,
wherein the application step is implemented with the aid of a recoating unit (40) comprised by the recoater (16), which recoating unit (40) comprises:
two recoating elements (41, 42) spaced apart from each other in the first direction (B1) and extending in a direction transverse to the first direction (B1), which recoating elements confine a receiving space for the building material in powder form (15) in the first direction (B1) and in its opposite direction (B2) and
a partition wall (43) that is arranged between the two recoating elements (41, 42) and at a distance to the two recoating elements (41, 42) with respect to the first direction (B1) and which partition wall extends in a direction transverse to the first direction (B1), thus dividing the receiving space for the building material into two chambers (44, 45),
wherein, depending on the recoater moving either in the first direction (B1) or in its opposite direction (B2), the recoating unit (40) receives building material in that chamber (44, 45) that is the trailing chamber in the respective direction of movement and
spreads the building material (15) received in the respective trailing chamber (44, 45) into a uniform layer by means of the respective trailing recoating element (41, 42).

10. The method according to claim 9, wherein the building material (15) received in the respective trailing chamber (44, 45) is fluidized while the recoating unit (40) moves across the build area (8).

11. The method according to claim 9 or 10, wherein, during its movement across the build area (8), the recoating unit (40) receives building material in powder form (15) continuously or at intervals from a powder discharge module (50) that moves across the build area (8) together with or separately from the recoating unit (40).

12. The method according to claim 11, wherein the building material in powder form (15) is metered by the powder discharge module (50) so that a powder level in the respective trailing chamber (44, 45) remains approximately constant.

13. The method according to one of claims 1 to 12, wherein a bottom side of the partition wall (43) of the recoating unit (40) is located at a lower level than at least one of the bottom sides of the two recoating elements (41, 42).

## Revendications

1. Unité d'enduction (40) destinée à équiper initialement et/ou ultérieurement un dispositif (1) pour fabriquer un objet (2) tridimensionnel par solidification sélective par couches d'un matériau de construction (15) pulvérulent, dans laquelle le dispositif (1) contient un enducteur (16) déplaçable par-dessus un champ de construction (8) pour appliquer une couche (31) du matériau de construction (15) sur le champ de construction (8) et un dispositif de solidification (20) pour une solidification sélective de la couche (31) appliquée en des emplacements qui correspondent à une section transversale de l'objet (2) à fabriquer, et conçue et/ou commandée pour répéter les étapes de l'application et de la solidification sélective, jusqu'à ce que l'objet soit fabriqué,
dans laquelle l'unité d'enduction (40) contient :
deux éléments d'enduction (41, 42) espacés l'un de l'autre dans une première direction (B1) et s'étendant dans une direction transversalement à la première direction, lesquels éléments d'enduction délimitent un espace de réception pour le matériau de construction (15) pulvérulent dans la première direction (B1) et dans sa direction opposée (B2), et
une paroi intermédiaire (43) qui est agencée entre les deux éléments d'enduction (41, 42) dans la première direction (B1), espacée des deux éléments d'enduction (41, 42), et s'étend dans une direction transversalement à la première direction (B1), moyennant quoi l'espace de réception est subdivisé en deux chambres (44, 45) pour le matériau de construction (15),
dans lequel l'unité d'enduction (40) est aménagée pour :
en fonction du déplacement de l'unité d'enduction (40) dans la première direction (B1) ou dans sa direction opposée (B2), recevoir un matériau de construction dans la chambre (44, 45) venant après dans la direction de déplacement respective, et
étirer en une couche uniforme (31) le matériau de construction (15) reçu dans la chambre (44, 45) venant respectivement après avec l'élément d'enduction (41, 42) venant respectivement après.

2. Unité d'enduction (40) selon la revendication 1, dans laquelle dans et/ou contre au moins l'un des éléments d'enduction (41, 42) et/ou la paroi intermédiaire (43) est agencé un équipement de fluidisation (46) qui est adapté pour fluidifier le matériau de construction (15) reçu dans l'une des deux chambres (44, 45).

3. Unité d'enduction selon la revendication 1 ou 2, qui contient un déflecteur (47) monté de façon pivotante, de préférence contre la paroi intermédiaire (43), pour guider un matériau de construction (15) amené jusque dans l'une des deux chambres (44, 45).

4. Unité d'enduction selon la revendication 3, qui contient un arbre (48) avec un excentrique (49), lequel arbre est agencé de telle sorte que par sa rotation le déflecteur (47) puisse être pivoté.

5. Enducteur (16) destiné à équiper initialement et/ou ultérieurement un dispositif (1) pour fabriquer un objet (2) tridimensionnel par solidification sélective par couches d'un matériau de construction (15) pulvérulent, dans lequel le dispositif (1) est adapté contre celui-ci pour recevoir l'enducteur (16) de telle sorte qu'il soit déplaçable par-dessus un champ de construction (8) pour appliquer une couche (31) du matériau de construction (15) sur le champ de construction (8), contient un dispositif de solidification (20) pour une solidification sélective de la couche (31) appliquée en des emplacements qui correspondent à une section transversale de l'objet (2) à fabriquer, et est conçu et/ou commandé pour répéter les étapes de l'application et de la solidification sélective, jusqu'à ce que l'objet (2) soit fabriqué,
dans lequel l'enducteur (16) comprend une unité d'enduction (40) selon l'une des revendications 1 à 4.

6. Enducteur (16) selon la revendication 5, comprenant en outre une unité de décharge de poudre (50) qui de préférence est réalisée de façon déplaçable ensemble avec l'unité d'enduction (40).

7. Enducteur selon la revendication 6, comprenant :
un déflecteur (47) monté de façon pivotante, de préférence contre la paroi intermédiaire (43) de l'unité d'enduction (40), pour guider un matériau de construction (15) amené jusque dans l'une des deux chambres (44, 45) de l'unité d'enduction (40), et
un arbre (48) avec un excentrique (49), lequel arbre est agencé de telle sorte que par sa rotation le déflecteur (47) puisse être pivoté,
dans lequel l'arbre (48) avec l'excentrique (49), dans son déplacement, est couplé au moins partiellement avec un déplacement d'un équipement de dosage (52) de l'unité de décharge de poudre (50).

8. Dispositif (1) destiné à fabriquer un objet (2) tridimensionnel par solidification sélective par couches d'un matériau de construction (15) pulvérulent, comprenant :
un enducteur (16) déplaçable par-dessus un champ de construction (8) dans une première direction (B1) et/ou dans sa direction opposée (B2) pour appliquer une couche (31) du matériau de construction (15) sur le champ de construction (8), et
un dispositif de solidification (20) pour une solidification sélective de la couche (31) appliquée en des emplacements qui correspondent à une section transversale de l'objet (2) à fabriquer,
dans lequel le dispositif (1) est conçu et/ou commandé pour répéter les étapes de l'application et de la solidification sélective, jusqu'à ce que l'objet (2) soit fabriqué, et
dans lequel l'enducteur (16) contient une unité d'enduction (40) selon l'une des revendications 1 à 4 et/ou est conçu en tant qu'enducteur (16) selon l'une des revendications 5 à 7.

9. Procédé destiné à fabriquer un objet (2) tridimensionnel par application par couches et solidification sélective d'un matériau de construction (15) pulvérulent, avec les étapes de :
application d'une couche (31) du matériau de construction (15) pulvérulent sur un champ de construction (8) au moyen d'un enducteur se déplaçant dans une première direction (B1) et/ou dans sa direction opposée (B2) par-dessus le champ de construction (8),
solidification sélective de la couche (31) pulvérulente appliquée en des emplacements qui correspondent à une section transversale de l'objet (2) à fabriquer, et
répétition des étapes de l'application et de la solidification sélective, jusqu'à ce que l'objet (2) soit fabriqué,
dans lequel l'étape de l'application est exécutée à l'aide d'une unité d'enduction (40) comprise dans l'enducteur (16), laquelle contient :
deux éléments d'enduction (41, 42) espacés l'un de l'autre dans une première direction (B1) et s'étendant dans une direction transversalement à la première direction (B1), lesquels éléments d'enduction délimitent un espace de réception pour le matériau de construction (15) pulvérulent dans la première direction (B1) et dans sa direction opposée (B2), et
une paroi intermédiaire (43) qui est agencée entre les deux éléments d'enduction (41, 42) dans la première direction (B1), espacée des deux éléments d'enduction (41, 42), et s'étend dans une direction transversalement à la première direction (B1), moyennant quoi l'espace de réception est subdivisé en deux chambres (44, 45) pour le matériau de construction,
dans lequel l'unité d'enduction (40), en fonction du déplacement de l'enducteur dans la première direction (B1) ou dans sa direction opposée (B2), reçoit un matériau de construction (15) dans la chambre (44, 45) venant après dans la direction de déplacement respective, et
étire en une couche uniforme le matériau de construction (15) reçu dans la chambre (44, 45) venant respectivement après avec l'élément d'enduction (41, 42) venant respectivement après.

10. Procédé selon la revendication 9, dans lequel le matériau de construction (15) reçu dans la chambre (44, 45) venant respectivement après est fluidifié pendant le déplacement de l'unité d'enduction (40) par-dessus le champ de construction (8).

11. Procédé selon la revendication 9 ou 10, dans lequel à l'unité d'enduction (40), pendant son déplacement par-dessus le champ de construction (8), est amené, en continu ou par intervalles, un matériau de construction (15) pulvérulent depuis un module de décharge de poudre (50) se déplaçant par-dessus le champ de construction (8) avec l'unité d'enduction (40) ou séparé de celle-ci.

12. Procédé selon la revendication 11, dans lequel le matériau de construction (15) pulvérulent est dosé par le module de décharge de poudre (50) de telle sorte qu'un niveau de poudre dans la chambre (44, 45) venant respectivement après demeure approximativement constant.

13. Procédé selon l'une des revendications 1 à 12, dans lequel un côté inférieur de la paroi intermédiaire (43) de l'unité d'enduction (40) se situe sur un niveau inférieur à au moins l'un des côtés inférieurs des deux éléments d'enduction (41, 42).
